# EUROPEAN PATENT APPLICATION

(11) **EP 1 111 921 A2**
(43) Date of publication of application: **27.06.2001**
(21) Application number: 00660239.5
(22) Date of filing: 21.12.2000
(51) Int. Cl.: H04N 7/14, H04N 7/15

(54) **Video conference system**

(30) Priority: 23.12.1999 FI 992777
(71) Applicant: NOKIA MOBILE PHONES LTD., 02150 Espoo (FI)
(72) Inventor: Inkinen, Sami, 33530 Tampere (FI); Terho, Mikko, 33820 Tampere (FI)
(74) Representative: Pursiainen, Timo Pekka

(57) **Abstract**

The invention relates to a video conference system comprising at least a mobile station (1), a camera (2), an acousto-electric transducer (3), an electro-acoustic transducer (4). In the video conference system, the acousto-electric transducer (3), the electro-acoustic transducer (4) and the camera (2) are arranged to be coupled to the mobile station (1) via at least one cable (5). The invention also relates to a method for forming a video conference system. The video conference system is formed of at least a mobile station (1), a camera (2), an acousto-electric transducer (3), and an electro-acoustic transducer (4). The acousto-electric transducer (3), the electro-acoustic transducer (4) and the camera (2) are coupled to the mobile station (1) by means of at least one cable (5).

## Description

The present invention relates to a device according to the preamble of the appended claim 1. The invention also relates to a method according to the preamble of the appended claim 7.

To allow better mobility of persons, mobile stations are available according to prior art, such as wireless telephones and mobile stations. Of mobile stations, very great popularity has been gained by a portable mobile phone, which can be for example a digital mobile phone in a mobile communication system based on a cellular network complying with the GSM standard (Global System for Mobile Communications).

For storing various information, devices are available according to prior art, such as notepad computers, small hand-held computers, or PDA devices (Personal Digital Assistant). These devices can be used for storing *e.g.* calendar events, notes, address data, telephone numbers, or corresponding information entered by the user. The data are normally entered in these devices by means of a keypad, but in some devices it is possible to store text data also by writing it directly on a touch screen *e.g*. by means of a pen-like object. The performance of these devices is continuously increasing, and they already comprise several properties known from PC devices (Personal Computer). For some devices, there are expansion cards complying with the PCMCIA (Personal Computer Memory Card International Application) standard available, to couple these devices *e.g.* to mobile phones. Thus, for example PDA devices can be used to transmit and receive for example telecopy messages, short messages (SMS, Short Message Service) and other text files by utilizing radio waves. In this specification, a PDA device refers to devices of the above-described art.

In a way known *per se,* there are also devices available, in which the functions of a mobile station and a PDA device are combined. One such known device is Nokia Communicator 9110, which can be used to communicate with the Internet network, to perform mobile phone functions, such as receiving a phone call and selecting a telephone number, and to receive *e.g.* telecopy messages. The properties of mobile stations, such as mobile phones, are continuously increasing, and they normally comprise functions *e.g.* for displaying images on the display of the mobile station. In this specification, a mobile stations refers to such a mobile station which may comprise functions of the above-described PDA device or a corresponding device.

A video conference and other applications related to video images will be significant when communication rates will rise *e.g.* with mobile stations based on third-generation UMTS technology (Universal Mobile Telecommunications System) or with mobile stations utilizing techniques which increase the data transmission capacity of the GSM network. Many such devices comprise an integrated video camera and the integrated functionality which makes a video conference possible. Nevertheless, there will be many such new and old devices which do not comprise an integrated video camera. This is primarily due to the fact that the implementation of a video camera in every device is relatively expensive and therefore increases the price of the final product. However, these devices may have a sufficiently sophisticated display to display video images and the potential for a sufficient functionality to use an external camera in a video conference.

A video conference refers to real-time duplex video and audio communication between two or several points via telecommunication networks. The video conference is interactive by nature, and various forms of multimedia can be used in the video conference. In the video conference, the aim is to use image and sound to produce conditions corresponding to a face-to-face conference, even though there is no physical contact. The video conference can be used *e.g.* in distance education, at meetings, conferences and seminars.

Video conference systems have been relatively complex and expensive. The most essential parts of a video conference system can be *e.g*. the audio and video equipment as well as their control devices which are installed for a video conference in a stationary location. The transfer of this equipment from one location to another is not very easy because of the size and number of the apparatus.

At present, it is already possible to implement a video conference system by means of a conventional multimedia computer, *i.e.* a computer, to which a microphone, a camera and speakers are coupled. The communication is normally arranged via a sufficiently fast data network, such as the Internet. This has become possible, because data networks have been developed to be sufficiently fast and reliable, the performance of computers has increased tremendously, and the necessary equipment, such as audio and video cards, have become more common and less expensive. Nevertheless, even if this computer were portable, it is still not very easy to transfer the video conference system from one location to another.

Today, portable hands-free (HF) sets are available for several mobile stations. Using these portable HF sets, a separate microphone/ earpiece combination is coupled to a mobile station. This combination is normally designed in such a way that it is as light-weight as possible and its parts are as small and convenient as possible. For this reason, the earpiece is normally of a so-called ear-plug type, and the microphone is equipped with a small clip which can be used to attach the microphone *e*.*g.* to a shirt collar.

By means of a portable HF set, it is easy to use a mobile station even in difficult situations, because both hands of the user are thus left free. Moreover, mobile stations normally have the option to select automatic answering; that is, the mobile station turns a call on without operations by the user *e.g*. after one alarm signal. It is thus quick and easy to answer an incoming call, because the earpiece and the microphone are already in the operating position and the user does not need to use his/her hands to answer the call.

It is an aim of the present invention to provide a very light-weight and compact video conference system in devices in which this property is not readily integrated but it can be implemented with auxiliary devices and possibly by updating the software of the mobile station. It is another aim of the invention to provide a video conference system which could be easily used without a fixed communication network.

According to the invention, it is possible to attain these aims by using a portable HF set in a mobile station, a video camera being arranged in connection with the same. The video conference system is thus not considerably heavier or bulkier than the mobile station by itself. Furthermore, if the mobile station is based on a system with an extensive geographical range, such as the GSM, or the UMTS in the future, the video conference system can be used in a very large geographical area.

More precisely, the video conference system according to the invention is characterized in what will be presented in the characterizing part of claim 1. Further, the method according to the invention is characterized in what will be presented in the characterizing part of claim 7.

The present invention gives considerable advantages to solutions of prior art. As the video conference system can be implemented merely by means of a mobile station and a portable HF set comprising a video camera, this system can be easily carried along, thanks to its light weight and compact size, and it can be used almost anywhere and at any time. The user can, for example, participate in a video conference in the middle of a forest or a lake, with no electricity or a fixed communication network. Secondly, the video conference system according to the invention is considerably less expensive to implement when compared with solutions of prior art.

In the following, the invention will be described in more detail with reference to the appended drawings which present a video conference system according to an advantageous embodiment of the invention. In the drawings,
- Fig. 1: shows a portable HF set according to the invention, comprising a video camera and being coupled to a mobile station,
- Fig. 2: shows the video conference system of Fig. 1 in a reduced block chart,
- Fig. 3: shows a mobile station and a portable HF set comprising a video camera in a video conference position, and
- Fig. 4: comprises another portable HF set comprising a video camera, complying with the invention.

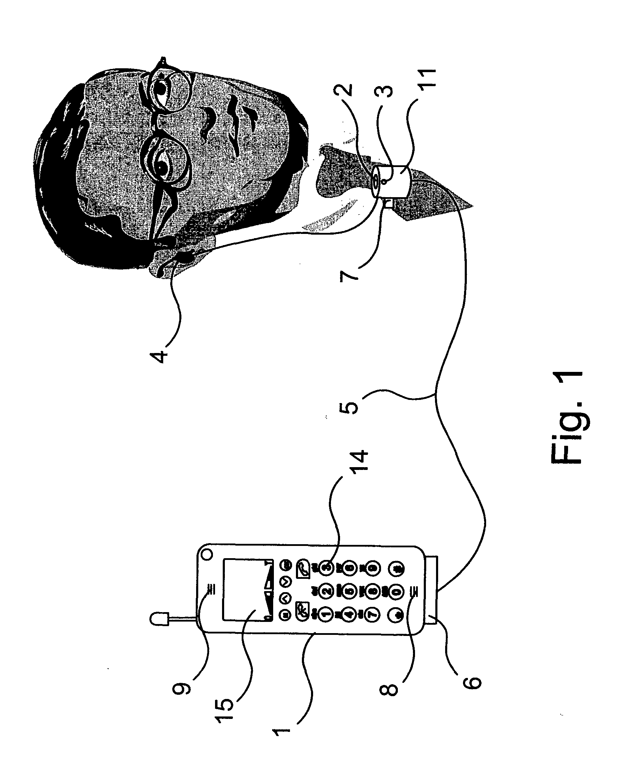

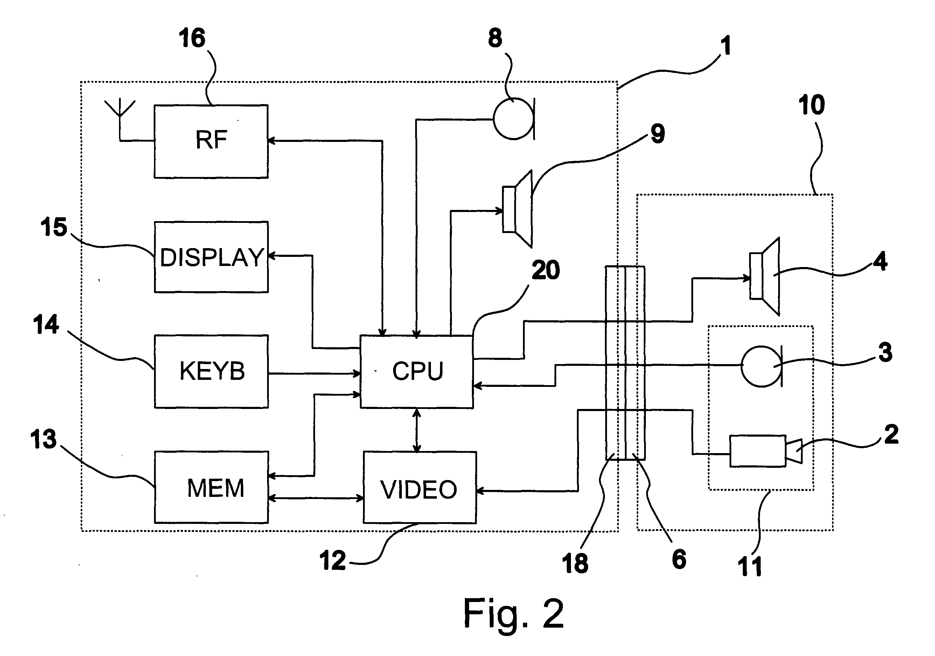

Figure 1 shows a video conference system according to an advantageous embodiment of the invention. The system comprises a mobile station 1, to which a HF set 10 comprising a video camera 2 is coupled (Fig. 2). The portable HF set 10 also comprises a microphone 3 and an earpiece 4. The earpiece 4 is preferably of a so-called ear-plug type, so that it would be as small and convenient to use as possible. The camera 2 and the microphone 3 are preferably arranged in the same housing which is equipped with a clip 7. In this description, this camera/ microphone combination will be referred to as a transmission unit 11. Communication between the portable HF set 10 according to the invention and the mobile station 1 is preferably implemented via a cable 5, because otherwise each device would need a separate power supply and a transceiver unit which would increase the size and price of the devices. This cable is coupled to the mobile station by means of an adapter 6.

Figure 2 shows, in a reduced block chart, the structure of the system. The portable HF set 10 according to a preferred embodiment of the invention comprises an earpiece 4 and a transmission unit 11 which preferably comprises a microphone 3 and a camera 2. The camera 2 in the transmission unit is preferably only an image-formation unit, wherein the camera 2 receives the power it needs from the mobile station 1 via a cable 5, and the storage of the video image and the image processing can take place in the mobile station 1.

The mobile station 1 comprises a microphone 8, an earpiece 9, a control block 20, a video block 12, a memory 13, a keypad 14, a display 15, and a radio block 16. The portable HF set 10 according to the invention is coupled to the mobile station 1 by means of an adapter 6 which fits the data communications port 18 of the mobile station 1 in such a way that the microphone 3 and the earpiece 4 of the portable HF set 10 are coupled to the control block 20 of the mobile station preferably in the same way as in solutions of prior art, and the camera 2 of the portable HF set 10 is coupled to the video block 12 of the mobile station 1 by a solution of prior art, for example the USB (Universal Serial Bus). It is the function of the video block 12 to convert the analog signal coming from the camera 2 to a digital format, to make the necessary corrections in the video image and to encode the video image to a format to be transmitted. For processing the video image, the video block 12 can use the same memory 13 that is used by the control block 20, or the video block can have a separate memory of its own. The video block 12 also takes care of processing the received video image into such a format that the video image can be displayed *e.g.* on the display 15 of the mobile station.

At present, the normal data transmission capacity in the GSM network, 9600 bit/s, is so small that it is not possible to transfer a high-quality video image over the network, even in compressed form. On the other hand, according to prior art, it is possible to gain more data transmission capacity by using *e.g*. the HSCSD (High Speed Circuit Switched Data) technique, whereby the user can be offered a circuit-switched connection having a rate of even 64 kbit/s. The HSCSD technique is based on the use of several GSM channels for a subscriber connection. The data transmission capacity can also be increased by using a packet-switched solution, such as the GPRS (General Packet Radio Service) technique, whereby a connection rate of even 184 kbit/s can be achieved. On the other hand, it is not possible at present to use the GPRS to guarantee a particular capacity, and its introduction will require new network components in GSM networks.

When the portable HF set 10 according to a preferred embodiment of the invention is coupled to a mobile station 1, the fixed microphone 8 and earpiece 9 of the mobile station 1 are preferably turned off after a connection is set up. The simultaneous use of both of the microphones 3, 8 or both of the earpieces 4, 9 will increase the power consumption of the mobile station, and on the other hand, the distance of the microphones 3, 8 from the sound source, that is, the mouth of the speaker, is not necessarily the same, wherein the sound is received at the microphones 3, 8 at a different time. This can be heard as changes in the tone of the sound, and as an echo. The microphone 8 and the earpiece 9 of the mobile station 1 can be preferably turned off always when the portable HF set 10 is coupled to the mobile station 1.

The portable HF set 10 according to a preferred embodiment of the invention can be used in the same way as portable HF sets of prior art, when the camera 2 is turned off. The camera 2 can be turned on and off preferably from the menu of the mobile station 1. In such a situation, the transmission unit 11 is fixed close to the user's mouth, *e*.*g*. to a shirt collar or a tie, by means of a clip 7. An ear-plug piece 4 is preferably placed in the user's ear, and the mobile station 1 can be *e.g.* in a pocket.

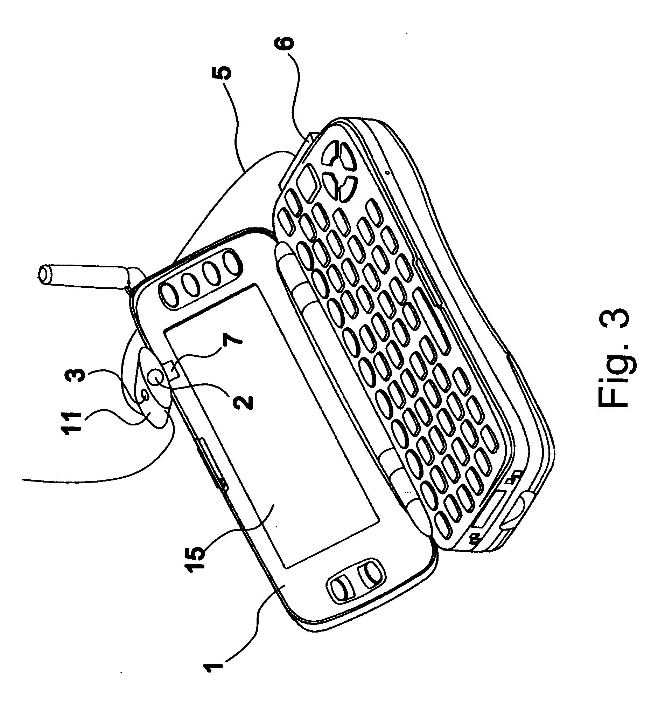

To use the system for a video conference, that is, when the camera is turned on, the transmission unit is placed *e.g.* on a table or on the mobile station 1 by means of the clip 7 as shown in Fig. 3 in such a way that the camera points at a desired object, *e.g.* one participant in the conference. The ear-plug piece is preferably still in the user's ear so that he/she could hear the sound of the other party. In this situation, the mobile station is preferably visible so that the user could watch the image transmitted by the other party on the display 15 of the mobile station 1. It is, naturally, possible that the user might not want to watch the image or hear the sound transmitted by the other party in a situation in which the user only wishes to transmit a real-time video image from the user's environment to the other party. Thus, the earpiece 4 does not need to be in the ear and the mobile station does not need to be visible.

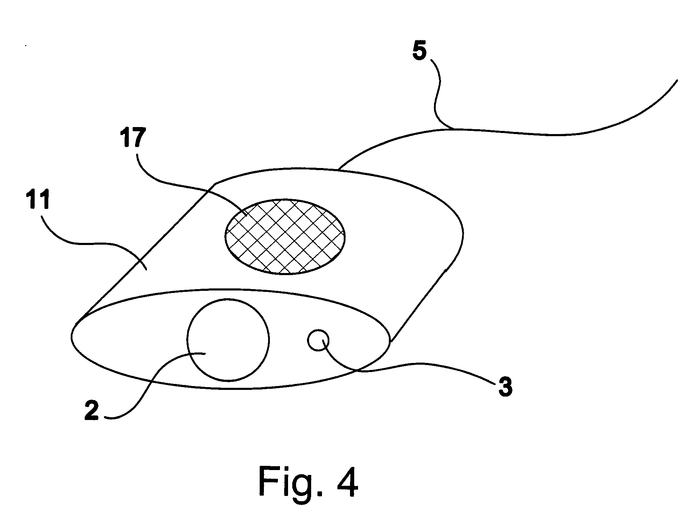

According to Fig. 4, the video conference system can also be implemented in such a way that the ear-plug piece 4 in the portable HF set is replaced with a speaker 17 installed in the transmission unit 11. Thus, the transmission unit 11 comprises all the components needed for the video conference: the camera 2, the microphone 3, and the speaker 17. This unit is further coupled to the mobile station 1 by a cable 5, because, to use wireless communication, a separate power source and a transceiver unit would need to installed in the transmission unit, in addition to the previous ones. This, in turn, would increase the size and manufacturing costs of the transmission unit 11.

It is also possible that the video conference system comprises, in addition to the portable HF set 10 and the mobile station 1, also *e.g.* a portable computer. This is useful particularly when one wishes to transmit to the other party *e*.*g*. text, files or images in addition to the video image and the sound during the video conference. Thus, also the video image and other data transmitted by the other party can be advantageously presented on the display of the portable computer. Because the mobile station 1 is used in this case only for transmitting data in a wireless manner, the mobile station 1 can also be a so-called card phone to be connected to the PCMCIA bus of the portable computer.

The present invention is not limited solely to the embodiments presented above, but it can be modified within the scope of the appended claims.

## Claims

1. A video conference system, **characterized** in that it comprises at least a mobile station (1), a camera (2), an acousto-electric transducer (3), an electro-acoustic transducer (4), and that the acousto-electric transducer (3), the electro-acoustic transducer (4) and the camera (2) are arranged to be coupled to the mobile station (1) via at least one cable (5).

2. The video conference system according to claim 1, **characterized** in that the camera (2) is an image formation unit which receives the necessary power supply from the mobile station (1), and that the processing and storage of the video image is arranged to be performed in the mobile station (1).

3. The video conference system according to claim 1 or 2, **characterized** in that a portable HF set (10) is composed of the acousto-electric transducer (3), the electro-acoustic transducer (4) and the camera (2), wherein the acousto-electric transducer (3) is a microphone, the electro-acoustic transducer (4) is an earpiece, and that the camera (2) and the microphone (3) constitute a transmission unit (11).

4. The video conference system according to claim 1 or 2, **characterized** in that the acousto-electric transducer (3), the electro-acoustic transducer (4) and the camera (2) constitute a transmission unit (11), wherein the acousto-electric transducer (3) is a microphone and the electro-acoustic transducer (4) is a speaker (17).

5. The video conference system according to claim 3 or 4, **characterized** in that the transmission unit (11) comprises a fixing means, by means of which the transmission unit (11) is arranged to be fixed.

6. The video conference system according to any of the claims 1 to 5, in which the mobile station (1) comprises an integrated microphone (8) and an integrated earpiece (9), **characterized** in that the integrated microphone (8) and earpiece (9) of the mobile station (1) are switched off preferably at least when the camera (2), the acousto-electric transducer (3) and the electro-acoustic transducer (4) are coupled to the mobile station (1).

7. A method for forming a video conference system, **characterized** in that the the video conference system is formed of at least a mobile station (1), a camera (2), an acousto-electric transducer (3), and an electro-acoustic transducer (4), and the acousto-electric transducer (3), the electro-acoustic transducer (4) and the camera (2) are coupled to the mobile station (1) by means of at least one cable (5).

8. The method according to claim 7, **characterized** in that the camera (2) is an image forming unit which receives the necessary power supply from the mobile station (1), and that the processing and storage of the video image is performed in the mobile station (1).

9. The method according to claim 7 or 8, **characterized** in that a portable HF set (10) is formed of the acousto-electric transducer (3), the electro-acoustic transducer (4) and the camera (2), wherein the acousto-electric transducer (3) is a microphone, the electro-acoustic transducer (4) is an earpiece, and that the camera (2) and the microphone (3) constitute a transmission unit (11).

10. The method according to claim 7 or 8, **characterized** in that the acousto-electric transducer (3), the electro-acoustic transducer (4) and the camera (2) constitute a transmission unit (11), wherein the acousto-electric transducer (4) is a speaker (17).

11. The method according to claim 9 or 10, **characterized** in that the transmission unit (11) comprises a fixing means which is used to fix the transmission unit (11).

12. The method according to any of the claims 7 to 11, in which the mobile station (1) comprises an integrated microphone (8) and an integrated earpiece (9), **characterized** in that the integrated microphone (8) and earpiece (9) of the mobile station (1) are turned off preferably at least when the camera (2), the acousto-electric transducer (3) and the electro-acoustic transducer (4) are coupled to the mobile station (1).
